**Europäisches Patentamt**

**European Patent Office**

**Office européen des brevets**

(19)

(11) Numéro de publication: **0 165 163**
**B1**

(12)

# FASCICULE DE BREVET EUROPÉEN

(45) Date de publication du fascicule du brevet:
**21.09.88**

(51) Int. Cl.⁴: **B 29 C 69/00,** B 29 C 53/56,
B 64 C 1/00

(21) Numéro de dépôt: **85401066.7**

(22) Date de dépôt: **30.05.85**

(54) Pièce de structure complexe.

(30) Priorité: **30.05.84 FR 8408524**

(43) Date de publication de la demande:
**18.12.85 Bulletin 85/51**

(45) Mention de la délivrance du brevet:
**21.09.88 Bulletin 88/38**

(84) Etats contractants désignés:
**BE CH DE GB IT LI**

(56) Documents cité:
**DE-A-1 704 759**
**DE-B-1 275 279**
**US-A-3 509 614**

(73) Titulaire: **AEROSPATIALE SOCIETE NATIONALE INDUSTRIELLE, 37, Boulevard de Montmorency, F-75781 Paris Cédex 16 (FR)**

(72) Inventeur: **Darrieux, Jean- Louis, 272 Avenue A. Briand, F-33700 Merignac (FR)**

(74) Mandataire: **Lepeudry- Gautherat, Thérèse, ARMENGAUD JEUNE CABINET LEPEUDRY 6, rue du Fg. St- Honoré, F-75008 Paris (FR)**

EP 0 165 163 B1

LIBER, STOCKHOLM 1988

## Description

L'invention concerne une armature composite selon le préambule de la revendication.

Une pièce de structure et de forme complexes est généralement de fabrication compliquée puisqu'elle met en oeuvre un nombre important de composants qui, eux-mêmes ne sont pas toujours des éléments de conception simple mais, au contraire, résulte, dans leur forme et leur section, des calculs de définition de la pièce.

Ce type de pièces se rencontre dans ce que l'on appellera des armatures c'est-à-dire un assemblage d'éléments qui forme le support ou la partie essentielle d'un ouvrage ou d'un appareil (on pourrait également l'appeler squelette). La complexité d'une armature se détecte par l'examen de sa structure c'est-à-dire de la manière dont les parties qui composent l'armature sont organisées entre elles.

Ainsi, on rencontrera une armature chaque fois qu'une fonction essentielle de support, de liaison est à assurer par une pièce unique dont les caractéristiques mécaniques sont définies de manière précise.

Plusieurs types de fabrication pour ce genre de pièces existent. La réalisation la plus traditionnelle consiste en un assemblage d'éléments métalliques individuels au moyen de fixations de toute sorte (soudures, vis, rivets...). L'inconvénient de ce mode de fabrication réside dans son coût élevé résultant d'une consommation de matière et de temps importante (usinage des éléments, montage, difficulté d'automatisation, ...).

On a pensé substituer à cette fabrication traditionnelle une fabrication à partir de matériaux synthétiques du genre résine chargée de fibres, pour une raison essentielle résidant dans la nécessité de gagner du poids. Les éléments constituant la structure furent alors conçus pour pouvoir être "moulés" ou conformés sur des formes et contre-formes que l'on revêt d'un drapage de tissu de fibres imprégné de résine polymérisable. Le gain de poides fut appréciable (de l'ordre de 50 % pour une armature donnée toutes choses égales ou comparables par ailleurs) mais le coût de fabrication n'avait pas sensiblement diminué: il était même légèrement supérieur à celui de la construction traditionnelle.

On connaît du document US-A-3 509 614 un procédé de fabrication d'une roue de filaments de structure et de forme complexes en composite durci, dans lequel on décompose ladite roue en une pluralité de pièces élémentaires dont la forme est déductible par découpe ou usinage d'une ébauche convexe creuse possédant un axe révolution et étant réalisée par enroulement filamentaire autour un mandrin.

En outre on connaît du document DE-A-1 704 759 des ébauches possédant un axe longitudinal qui sont réalisées par enroulement filamentaire autour de cet axe et qui sont utilisées pour fabriquer une armature de structure et de forme complexes par exemple des éléments de chauffage.

Il faut cependant noter que pour des armatures destinées à des engins volants, possédant un axe longitudinal de symétrie, il convient aussi de réaliser les pièces élémentaies qui constituent les poutres et renforts à partir d'ébauches obtenues par enroulement filamentaire.

L'invention permet d'allier les deux impératifs, légèreté et coût très abaisse, ce qui d'une part, réserve une grande application dans le domaine aéronautique et spatial et d'autre part, permet de trouver d'autres applications dans des secteurs où la contrainte du prix de revient est au moins aussi importante que celle du poids.

A cet effet donc, l'invention a pour objet une armature ou analogue possédant un axe longitudinal et constituée par une enveloppe extérieure coaxiale audit axe, par un ensemble de pou res perpendiculaire au dit axe et par un caisson annulaire d'ancrage de l'extrémité des poutres à l'intérieur de ladite enveloppe possédant des renforts d'entretoisement entre les poutres, armature selon laquelle, les poutres et renforts sont issus d'ébauches obtenues par enroulement filamentaire usinées, le caisson étant constitué de deux demi- boîtiers possédant un fond et des ailes cylindriques égales entre elles et égale aux creux qui les separent, ces ailes provenant par découpage de la virole d'une ébauche obtenue par enroulement filamentaire les poutres et renforts étant assemblés par collage aux demi- boîtiers emboîtés l'un dans l'autre par leurs ailes cylindriques et l'enveloppe extérieure étant bobinée sur un mandrin dont une partie est constituée par la face extérieure des ailes cylindriques susdites.

On rappellera que dans les techniques de bobinage ou d'enroulement filamentaire, il est connu d'employer toute sorte de matériau de base susceptible d'être bobiné tel que le verre, la silice, le kevlar, le carbone, le carbure de silicium, l'alumino-silicate de bore, l'alumine... La rigidification du produit sera obtenue par durcissement d'un liant réparti entre les fibres bobinées, qui seront soit sèches soit préimprégnées.

Le choix du liant, métallique ou organique, dépendra de la nature des fibres et des caractéristiques recherchées du matériau composite que l'on veut obtenir.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels:

La Figure 1 est un schéma illustrant la disposition d'une armature dans un engin et son rôle de support d'équipements et de liaison des étages inférieur et supérieur de l'engin.

La Figure 2 est une vue partielle de l'armature de la Figure 1 telle qu'elle est susceptible d'être réalisée avec une technique classique de découpe et d'assemblage d'éléments métalliques.

La Figure 3 illustre par une vue de détail partielle la décomposition de l'armature selon la Figure 1 en éléments réalisables par enroulement filamentaire.

La Figure 4 schématise une opération d'enroulement filamentaire permettant d'obtenir des pièces de renfort et de traverse de l'armature de la Figure 3.

Les Figures 4A et 4B illustrent ces pièces obtenues après usinage du produit de la Figure 4.

Les Figures 5A, 6A et 6B illustrent l'obtention des pièces de boîtier de l'armature.

La Figure 7 montre le montage des pièces élémentaires susdites.

La Figure 8 illustre la constitution du mandrin de bobinage de la virole finale.

La Figure 9 montre le bobinage de cette virole.

Les Figures 10A et 10B illustrent la finition de l'armature.

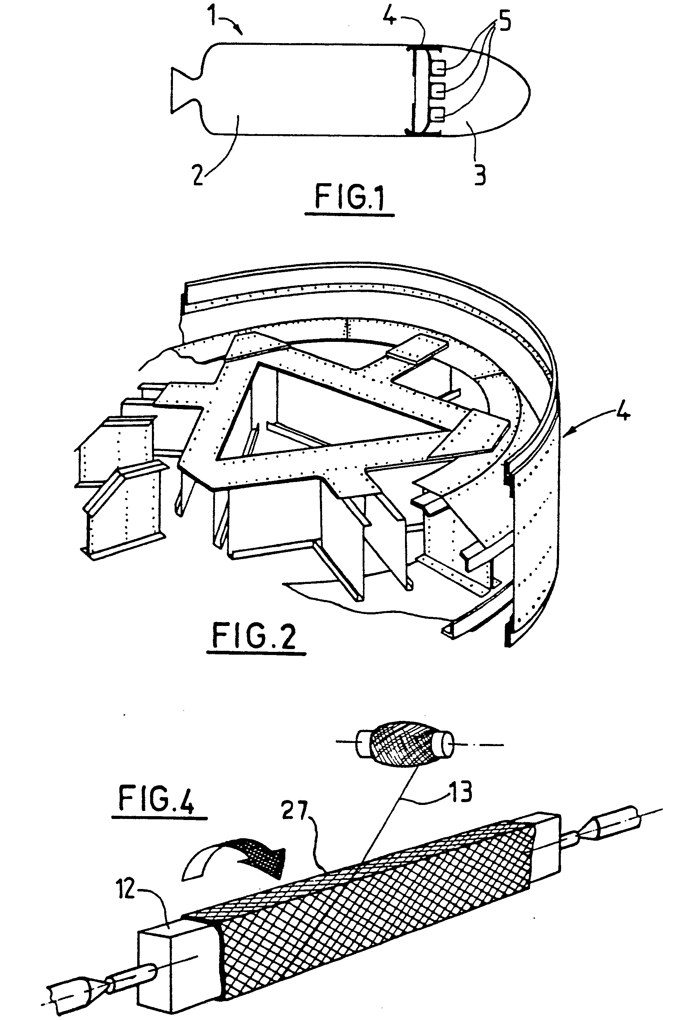

En se reportant tout d'abord à la Figure 1, on voit un engin balistique 1, entre l'étage propulsif 2 et la tête ou coiffe 3 duquel on a représenté une armature porte équipements 4. Cette armature est inscrite dans un volume cylindrique, correspondant à la géométrie de l'engin, dont l'axe de symétrie longitudinal est celui de l'engin. Elle a pour fonctions de supporter trois équipements 5 de masse égale pendant la phase de vol et d'assurer la liaison entre les sous ensembles inférieur 2 et supérieur 3 garantissant ainsi la cohérence de l'ensemble de l'engin lors des manutentions et du vol.

La Figure 2 est une vue en perspective d'une armature telle que 4 réalisée selon une technique traditionnelle au moyen de feuilles de matériau léger découpées formées et assemblées par vis et rives sur des cadres métalliques usinés dans de la tôle de forte épaisseur.

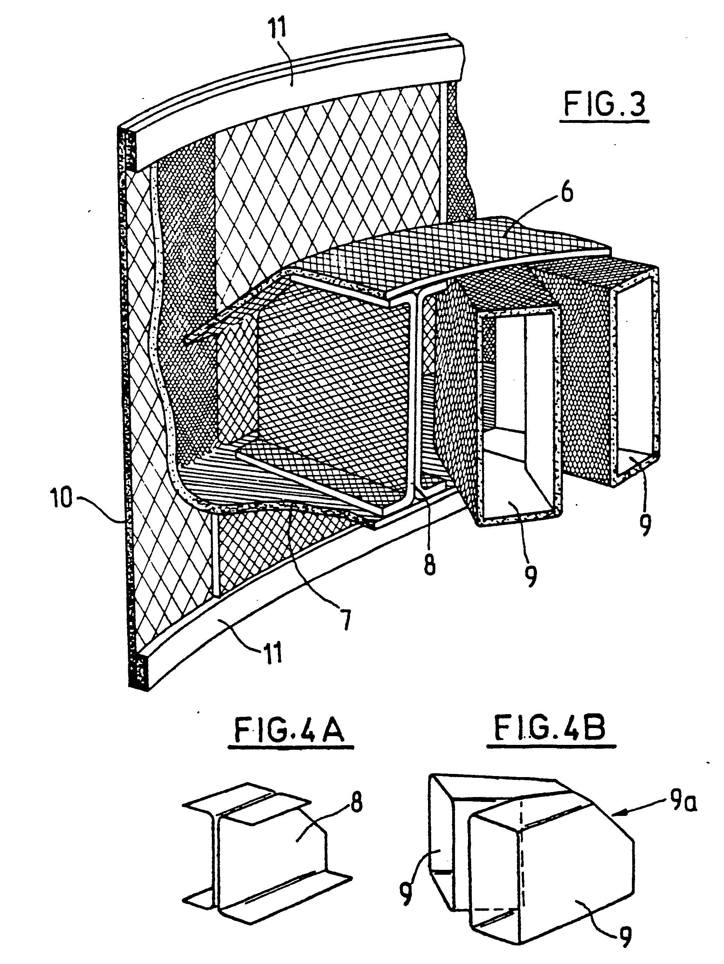

La Figure 3 montre que l'armature de la Figure 2 peut être décomposée en un nombre minimum de pièces qui peuvent être fabriquées par enroulement filamentaire. Ainsi l'armature 4 comprend essentiellement deux caissons 6 et 7 entre lesquels sont disposés des renforts 8 et les extrémités adjacentes de poutres 9 formant un système triangulé. L'ensemble est logé dans une virole 10 qui comporte à chacune de ses extrémités axiales un cadre 11.

Les Figures 4 à 10B montrent qu'effectivement toutes les pièces constitutives de l'armature 4 peuvent être issues d'un bobinage filamentaire. C'est ainsi que la Figure 4 montre qu'à partir d'un mandrin 12 de section rectangulaire, on peut réaliser l'une des poutres 9 susdits par bobinage d'une ébauche 27 à l'aide d'un fil 13 sur ce mandrin (avec apport de résine polymérisable). La pièce creuse qui en est issue sera bien entendu démoulable de manière connue (pente du mandrin, utilisation d'agents de démoulage...). Elle sera mise à longueur par tronçonnage et/ou biseautage. On pourra alors, par collage, constituer l'armature triangulée susdite dont l'un des angles 9a est représenté sur la Figure 4B.

Sur la Figure 4A on a représenté les renforts 8 qui proviennent de l'ébauche de la Figure 4 que l'on a fendue longitudinalement, les deux parties étant alors collées dos à dos et mises à longueur par sciage ou coupage.

Ces ébauches 27 pourraient être réalisées par drapage de tissu ou de tresse tandis que les pièces 8, 9 pourraient être métalliques et assemblées entre elles par tout moyen connu tel que vissage, soudage...

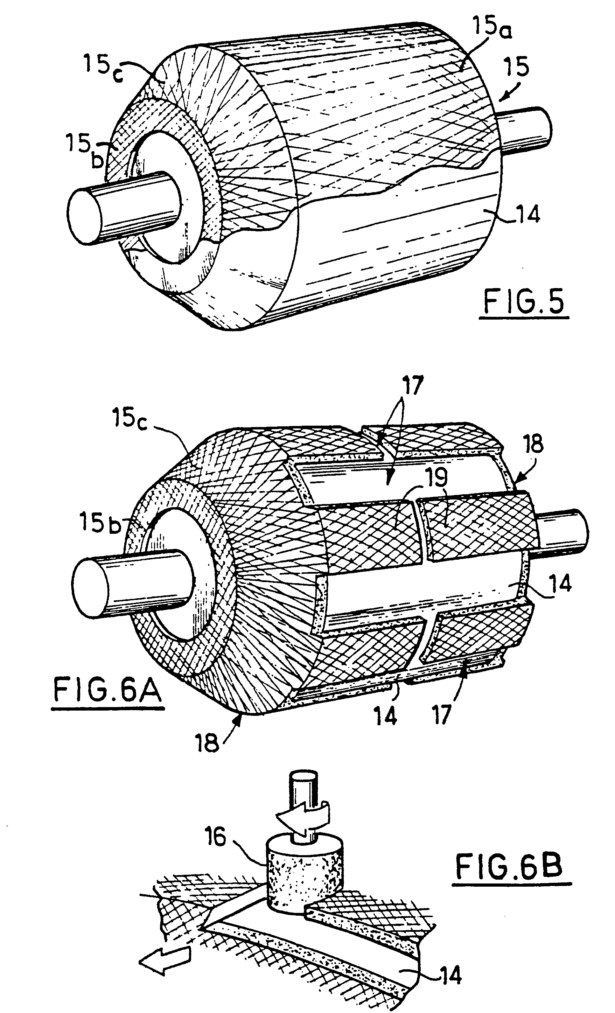

La Figure 5 montre un mandrin 14 sur lequel on bobine un boîtier 15 qui possède une virole 15a et un fond 15b raccordé à la virole 15a par une partie tronconique 15c.

La Figure 6A montre qu'avec un outil adéquat 16 du genre fraise ou meule, on pratique dans la virole 15a de la pièce 15 plusieurs saignées 17 jusqu'à découvrir le mandrin 14, la découpe ainsi obtenue étant représentée sur la Figure 6B. On voit sur cette figure que l'on a pu constituer deux boîtiers 18 identiques possédant des parois 15b, 15c sensiblement radiales et des ailes 19 provenant du découpage de la virole 15a en parties égales entre elles et égales aux creux qui les séparent. On notera en outre que cette découpe permet le démoulage des deux boîtiers 18.

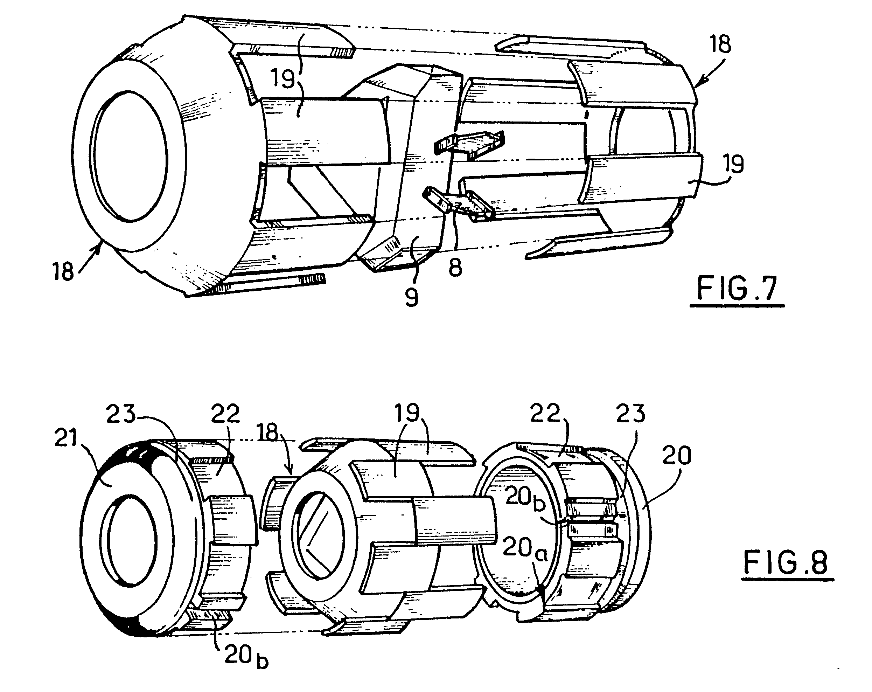

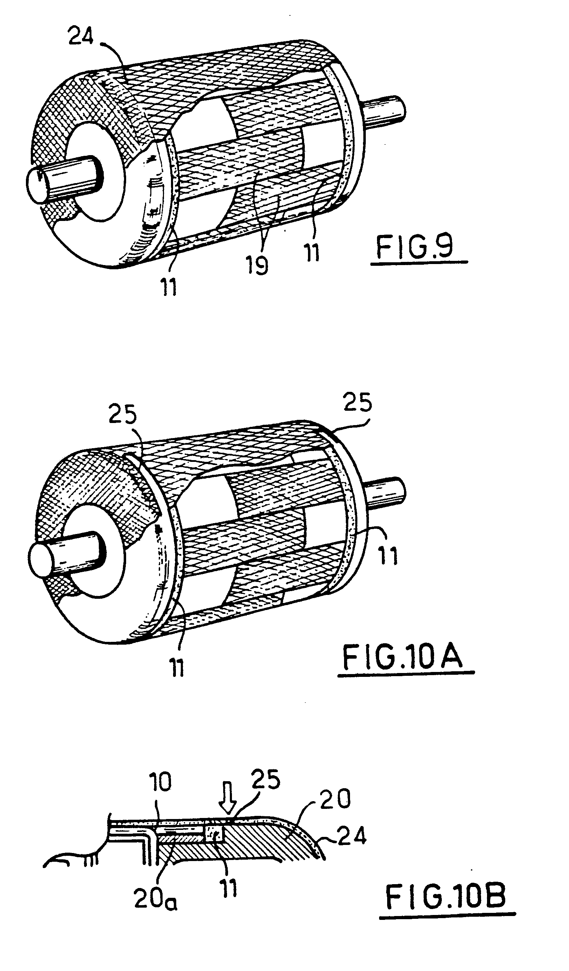

La Figure 7 montre comment l'on présente les pièces constituées (structure triangulée de poutres 9, renforts 8 et boîtiers 18) pour les assembler après avoir enduit les surfaces pointillées d'un film de colle. Le sous-ensemble monté apparaît à la Figure 8 où il est complété par deux mandrins d'extrémité 20 et 21 qui possèdent des creusures longitudinales 22 pour recevoir l'extrémté des ailes 19 et pour chacun d'eux une gorge d'extrémité 23 dans laquelle, soit on aura placé un cadre 11 préfabriqué (métallique ou en matériau composite), soit on aura bobiné un cadre préalablement au bobinage d'une enveloppe 24 apparaissant à la Figure 9. Cette enveloppe constitue l'ébauche de la virole 10 de la Figure 3 qui est obtenue comme le montre la Figure 10A en séparant par fraisage (ou meulage) 25, directement sur les parties de mandrin 20 et 21, la partie axiale de l'ébauche 24 de ses calottes d'extrémité.

Suivant une autre caractéristique de l'invention et à l'aide d'une loi de bobinage adaptée il est possible, en faisant varier l'inclinaison des fibres par rapport à l'axe du mandrin, de laisser des zones, non représentées, vides de matière lors du bobinage de l'enveloppe 24. Sans être amené à découper des fibres, ces zones seront avantageusement utilisées pour aménager portes, hublots ou toute autre ouverture dans les viroles 10.

La Figure 10B montre par une coupe axiale d'une extrémité de la Figure 10A qu'en fait les mandrins rapportés tels que 20 et 21 possèdent une bague amovible 20a, porteuse des creusures 22, qui peut se contracter parce que fendue en 20b (Figure 8) pour être démontée en passant notamment par-dessus le cadre 11.

L'exemple de réalisation donné ci-dessus d'une armature porte-équipements pour engin balistique, trouve de nombreuses variantes d'application et ce, dans de nombreux domaines. En effet l'une de ses qualités est d'offrir toutes choses égales par ailleurs, un gain de poids de l'ordre de 50 % par rapport à l'armature représentée en Figure 2. Il ressort de cette qualité une aptitude toute particulière du procédé de l'invention et des pièces qui en sont issues à l'industrie aéronautique et spatiale.

Par ailleurs, en plus de ce gain de poids, on a constaté que le coût de l'armature selon l'invention était d'environ 50 % inférieur à celui de l'armature selon la Figure 2. En effet, l'armature peut être réalisée par des machines tournantes simples avec des mandarins qui ne sont pas consommables et des matériaux bien connus et bon marché. Le procédé d'enroulage filamentaire permet de limiter au maximum les pertes de matière première et présente une grande souplesse se prétant à une automatisation relativement simple, tout autant de facteurs de diminution du cout, qui permettent à l'invention d'intéresser toutes les branches d'industrie.

On notera pour mémoire qu'un nombre important de pièces de mécanique simples telles que cornières, arceaux, profilés I, U, T à section constante ou décroissante, à génératrice courbe ou rectiligne peuvent être obtenus par la technique du bobinage filamentaire associé à un découpage astucieux de l'ébauche.

L'invention trouve une application intéressante dans le domaine de la fabrication des structures complexes pour l'aéronautique, l'automobile, les véhicules en général, les conteneurs, les abris ou constructions tridimensionnelles à charpente...

### Revendication

Armature composite possédant un axe longitudinal de symétrie, constituée par une enveloppe (10) extérieure coaxiale audit axe, par un ensemble de poutres (9) perpendiculaire audit axe et par un caisson annulaire (6, 7) d'ancrage de l'extrémité des poutres (9) à l'intérieur de ladite enveloppe (10) possédant des renforts (8) d'entretoisement entre les poutres (9), caractérisée en ce que les poutres (9) et renforts (8) sont issus d'ébauches (27) obtenues par enroulement filamentaire usinées, en ce que le caisson (6, 7) est constitué de deux demi-boîtiers (18) possédant un fond et des ailes cylindriques (19) égales entre elles aux creux qui les separent, ces ailes (19) provenant par découpage de la virole (15a) d'une ébauche (15) obtenue par enroulement filamentaire en ce que es poutres (9) et renforts (8) sont assemblés par collage aux demi- boîtiers (18) emboîtés l'un dans l'autre par leurs ailes (19) cylindriques et en ce que l'enveloppe extérieure (10) est bobinée sur un mandrin (19, 20, 21) dont une partie est constituée par la face extérieure des ailes cylindriques (19) susdites.

### Patentanspruch

Zusammengesetzter Baukörper mit einer längsverlaufenden Symmetrieachse, bestehend aus einer mit dieser Achse koaxialen äußeren Umhüllung (10), einer Anordnung von zu dieser Achse senkrechten Balken (9) und aus einem ringförmigen Verankerungsgehäuse (6, 7) für die Balkenenden im Inneren der Umhüllung (10), das zwischen den Balken (9) querverlaufende Verstärkungen (8) enthält, dadurch <u>gekennzeichnet</u>, daß die Balken (9) und Verstärkungen (8) aus durch Wickeln eines Filaments erhaltenen und bearbeiteten Rohlingen (27) hervorgegangen sind, daß das Gehäuse (6, 7) aus zwei Halbschalen (18) mit einem Boden und untereinander gleichen und in gleichen Abständen auftretenden zylindrischen Flügeln (19) besteht, die durch Ausschneiden des Ringes (15a) eines durch Wickeln eines Filaments erhaltenen Rohlings (15) hergestellt sind, daß die Balken (9) und Verstärkungen (8) durch Ankleben an die Halbschalen (18) zusammengesetzt sind, die mit ihren zylindrischen Flügeln (19) ineinandergreifen, und daß die äußere Umhüllung (10) auf einen Dorn (19, 20, 21) aufgewickelt ist, von dem ein Teil von der Außenfläche der zylindriscnen Flügel (19) gebildet wird.

### Claim

Composite armature having a longitudinal axis of symmetry constituted by an exterior envelope (10) coaxial to the said axis, by an assembly of beams (9) perpendicular to the said axis and by an annular anchoring casing (6, 7) at the ends of the beams (9) at the interior of the said envelope (10) having cross piece reinforcements (8) between the beams (9), characterised in that the beams (9) and reinforcements (8) are the result of blanks (27) obtained by factory filamentary winding, in that the casing (6, 7) is constituted by two half boxes (18) having a base and cylindrical wings (19) equal among themselves and equal to the slots which separate them, these wings (19) emerging by cutting from the collar (15a) of a blank (15) obtained by wire winding, in that the beams (9) and reinforcements (8) are assembled together by adhesion to the half boxes (18) meshed one into the other by means of their cylindrical wings (19) and in that the exterior envelope (10) is wound on a mandrel (19, 20, 21) one part of which is formed by the exterior face of the above mentioned cylindrical wings (19).

FIG.1

FIG.2

FIG.4

FIG.3

11

6

10

8

9

9

7

11

9

FIG.4A

8

FIG.4B

9a

9

9

3

FIG.5

FIG.6A

FIG.6B

FIG.8

FIG.7

FIG.9

FIG.10A

FIG.10B